Europäisches Patentamt

European Patent Office

Office européen des brevets

(11) Veröffentlichungsnummer: **0 393 414**
A1

# (12) EUROPÄISCHE PATENTANMELDUNG

(21) Anmeldenummer: **90106284.4**

(22) Anmeldetag: **02.04.90**

(51) Int. Cl.5: **G01F 11/02**

(30) Priorität: **20.04.89 DE 3912927**

(43) Veröffentlichungstag der Anmeldung:
**24.10.90 Patentblatt 90/43**

(84) Benannte Vertragsstaaten:
**AT BE CH DE DK ES FR GB IT LI LU NL**

(71) Anmelder: **Laskowski, Sigismund**
**Kallstadterstrasse 127**
**D-6700 Ludwigshafen/Rhein(DE)**

(72) Erfinder: **Laskowski, Sigismund**
**Kallstadterstrasse 127**
**D-6700 Ludwigshafen/Rhein(DE)**

(74) Vertreter: **Ratzel, Gerhard, Dr.**
**Seckenheimer Strasse 36a**
**D-6800 Mannheim 1(DE)**

(54) **Universelles Dosiersystem.**

(57) Die Erfindung betrifft ein umweltfreundliches, genaues, sicheres, mit einer nachträglichen Korrektur versehen, universelles Dosiersystem.

Der Erfindung liegt die Aufgabe zugrunde, das bestehende Dosiersystem das aus einer Kappe (Abdeckung) in der eine spezifische, bewegliche Lasche, die eine Öffnung aufweist, besteht, derart weiterzubilden, daß eine einfache, sichere und präzise, vorwiegend im medizinischen und chemischen Bereich notwendige Dosierung gegeben ist.

*Fig.1*

Die Erfindung betrifft ein universelles, verstellbares und exaktes Dosiersystem für diverse Flüssigkeitsarten, das für verschiedene Zwecke wie z.B. für eine genaue Dosierung von giftigen Substanzen, als auch für medizinische Zwecke, Verwendung finden kann. Die aus dem Stand der Technik bekannte Dosiersysteme weisen mehrere Nachteile auf, wie:

- teure Herstellung
- komplizierte und aufwendige Bedienung
- bei der Dosierung von giftigen Substanzen besteht die Gefahr, leicht in Berührung mit denen zu kommen
- umweltunfreundlich, da nach dem Dosiervorgang die Gefahr besteht, daß die sich im Dosiersystem befindliche Giftreste unkontrolliert austreten
- eine Temperaturabhängigkeit der meisten Dosiersysteme
- nach abgeschlossenem Dosiervorgang bleibt manchmal der restliche Tropfen an der Austritt-Öffnung oder verbleiben Reste an den Wänden hängen
- bei den meisten Systemen keine Sicherung (Arretierung) gegen Kinder vorgesehen
- keine einfache Korrektur der vorgegebenen Menge der Dosiersubstanz
- es ist nicht möglich mit dem selben Dosierungssystem zwei verschiedene Arbeitsweisen durchzuführen
- keine hohe Zuverlässigkeit des Dosiersystems

Der Erfindung liegt daher die Aufgabe zugrunde, so ein Dosiersystem zu entwickeln daß alle o.g. Nachteile behoben werden.

Zur Lösung dieser Aufgabe wird erfindungsgemäß das Dosiersystem das aus einer aufklappbaren, beweglichen Lasche besteht, die in der Abdeckung des Spendebehälters integriert ist, und daß die Lasche eine Öffnung aufweist durch die nur in einer Stellung gegenüber der Abdeckung, das Heraustreten der dosierten Substanz gegeben ist, und daß bei jeder anderen Stellung der Lasche das Heraustreten der dosierten Substanz nicht möglich ist. Das neue Dosiersystem ist derart spezifisch weiter entwickelt, daß der vordere Teil der Lasche im Ausgangsbereich, zu einem spezifischen Hohlraum gestaltet ist, und daß der Hohlraum im vorderen Teil eine Öffnung aufweist die ihn mit dem Spendebehältergut mittels der Lascheöffnung verbindet und daß der Hohlraum auch eine Austrittsöffnung für die dosierte Substanz aufweist. Der hintere Hohlraumbereich wird zu einem Anschlagpunkt gestaltet oder mit einem separaten Anschlagpunkt versehen, der jeweils zusammen mit der Kolbenstange-Markierung oder spezifischer - Ausnehmung eine genaue Dosierung garantiert und verhindert gleichzeitig das Herausziehen des Kolbens aus dem Hohlraum. Wie bereits erwähnt, befindet sich im Hohlraum ein beweglicher Kolben der mit der Kolbenstange verbunden ist und dessen Querschnitt an den Hohlraum-Querschnitt angepaßt ist und zwar so spezifisch, daß er den Hohlraum, auf der ganzen Länge, in jeder beliebigen Stelle, genau abdichtet und daß die Breite des Kolbens so gestaltet ist, daß in der Ausgangsposition (Kolben mit Kolbenstange ganz im Hohlraum) immer noch ein sicheres Abdichten der Lascheöffnung garantiert ist.

Funktionsprinzip des Dosiersystems:

Das Dosiersystem kann in der Kappe (Abdeckung) untergebracht werden, d. h. bei dem geschlossenen Dosiersystem kann es in der Kappe versenkt werden, so daß kein Zugang zu dem Dosiersystem gegeben ist und gleichzeitig kein Heraustreten der dosierten Substanz mittels der Lascheöffnung in das Dosiersystem möglich ist. Um das Dosiersystem in die Arbeitsposition zu bringen wird die Lasche samt der Dosiereinrichtung aus der Versenkung so weit herausgehoben bis der freie Durchgang der dosierten Substanz aus dem Spendenbehälter in das Dosiersystem gegeben ist, und bis das Dosiersystem problemlos bedient werden kann. Das Füllen des Hohlraumes (Meßraumes) kann auf zwei verschiedene Arten vorgenommen werden:

- zuerst wird das Volumen des Hohlraumes (Meßraumes) mittels der Kolbenstange und somit des Kolbens festgelegt.

Durch das Umdrehen des Spendenbehälters (Dosiersystem unten) füllt sich der Hohlraum blasenfrei mit der Dosiersubstanz. Anschließend erfolgt die Umstellung des Dosiersystems samt Lasche in so eine Position, daß kein zurückfließen der im Dosiersystem geschlossenen Substanz in den Spendenbehälter, unabhängig von der Lage des Dosiersystems und des Spendenbehälters, erfolgen kann (Lascheöffnung verschlossen).

Durch das Bewegen des Kolbens wird die gewünschte Menge der dosierten Substanz mittels der Austrittöffnung freigegeben. Somit wird das Dosiersystem in die Ausgangsposition gebracht und kann in die Kappe versenkt werden.

- zuerst wird der Spendenbehälter umgedreht (Dosier system unten).

Jetzt wird der Kolben mittels der Kolbenstange aus der Ausgangsposition bis zum Anschlagpunkt bewegt, was ein gleichzeitiges Füllen des Hohlraumes (Meßraumes) verursacht.

Anschließend erfolgt die Umstellung des Dosiersystems samt Lasche in so eine Position,... wie bereits bei der ersten Artbeschreibung erklärt ist.

Die Erfindung wird nachfolgend anhand der in der Zeichnung dargestellten Ausführungsbeispiele näher erläutert.

Es zeigt

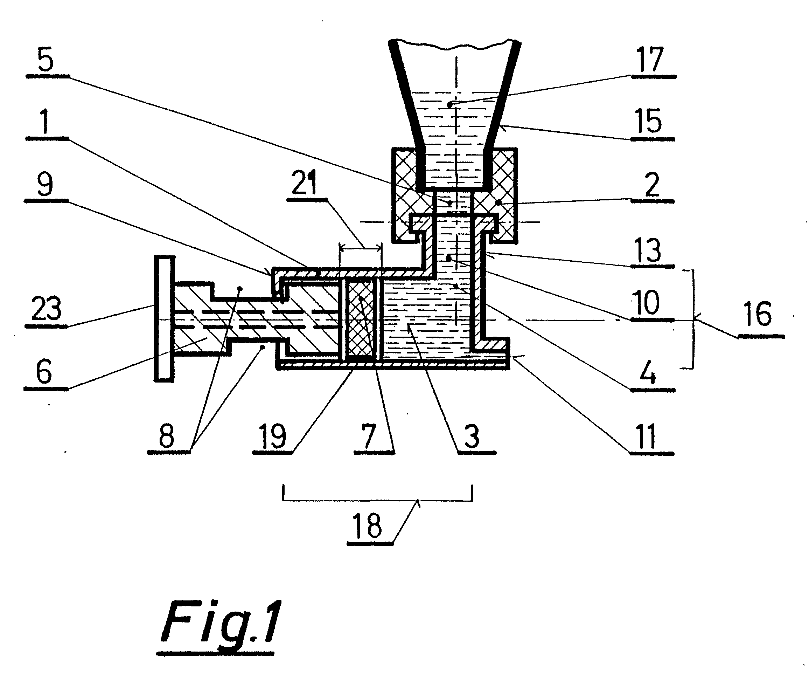

Fig. 1 zeigt einen Längsschnitt durch das neuentwickelte Dosiersystem, das in so einer Position ist, daß ein problemloses Füllen des Hohlraumes (3) mit dem Spendegut (17) aus dem Spendebehälter (15) erfolgen kann.

Gemäß Fig. 1 ist der vordere Teil der Lasche (13) zu einem spezifischen Hohlraum (3) gestaltet. Als Pos. (7) ist der bewegliche Kolben zu erkennen. Weiterhin ist der Verbindungskanal (10) dargestellt, der einen freien Durchlauf des Spendegutes (17) bis zum Hohlraum (3) garantiert.

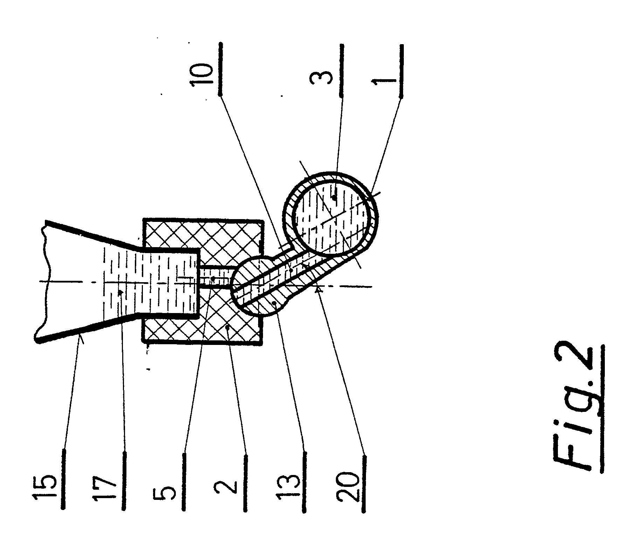

Fig. 2 zeigt einen Querschnitt durch das neuentwickelte Dosiersystem, das in so einer Position ist, daß kein Füllen des Hohlraumes (3) mit dem Spendegut (17) aus dem Spendebehälter (15) möglich ist. Es ist die Stellung der Lasche (13) bei der die Freigabe des Dosierspendegutes erfolgen kann. U. a. sind die Vorstellungsmöglichkeiten der Lasche (13) samt Hohlraum (3) zu erkennen.

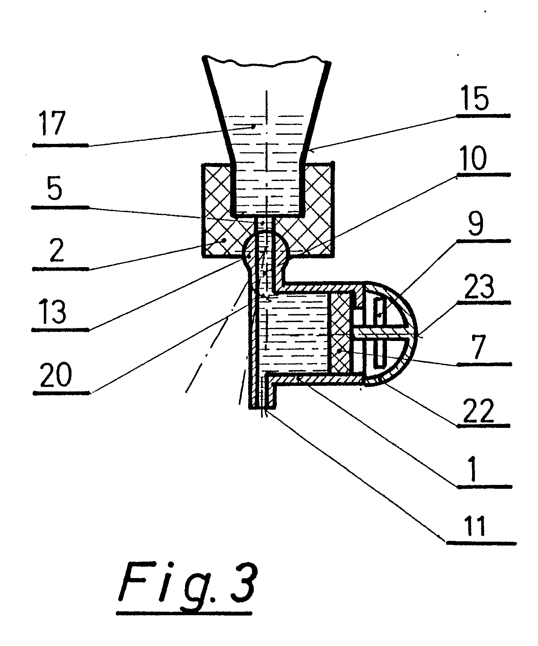

Fig.3 zeigt einen Längsschnitt durch eine andere Ausführung
- mit der Spannvorrichtung (22)-, durch das neuentwickelte Dosiersystem, das in so einer Position ist, daß ein Füllen des Hohlraumes (3) mit dem Spendegut (17) aus dem Spendebehälter (15) möglich ist.

Hier ist zu erkennen, daß der bewegliche Kolben (7) sich in der Ausgangsposition (Fixierposition) befindet. Als Position (23) ist die Druckstelle, mittels der der Kolben (7) bewegt wird, und somit die gewünschte Dosiermenge des Spendegutes (17) aus dem Hohlraum (3) frei gegeben wird.

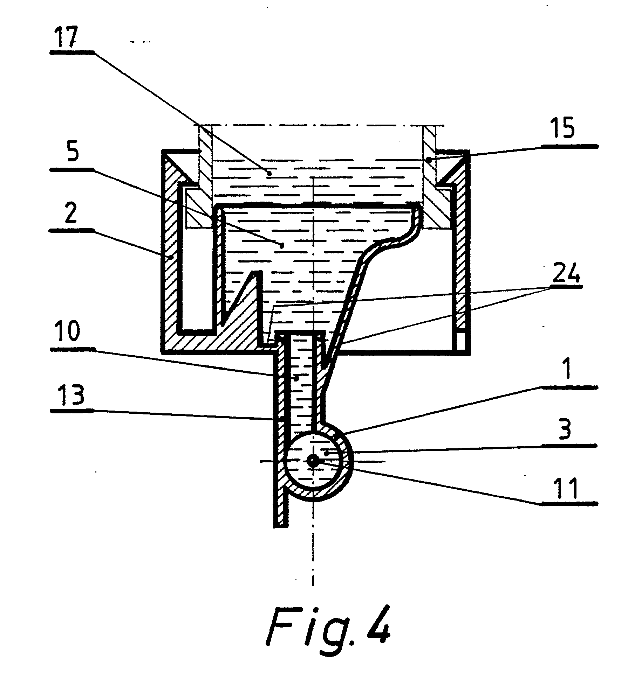

Fig.4 zeigt einen Querschnitt über eine andere Variante von dem neu entwickeltem Dosiersystem. Durch diese neuartige Kombination ist auch eine einwandfreie Abdichtung zwischen der Lasche (13) und der Kappe (2) garantiert.

Die Fig.4 zeigt das neuentwickelte System in der Position, in der das Füllen des Hohlraumes (3) mit dem Spendengut (17) aus dem Spendenbehälter (15) möglich ist.

Zu erkennen ist auch, daß die Kappe (2), die Lasche (13) und der Hohlraum (3) als eine Einheit hergestellt sind.

In dieser Position der Lasche (13) ist jegliche Korrektur des Dosiervolumens im Hohlraum (3) möglich.

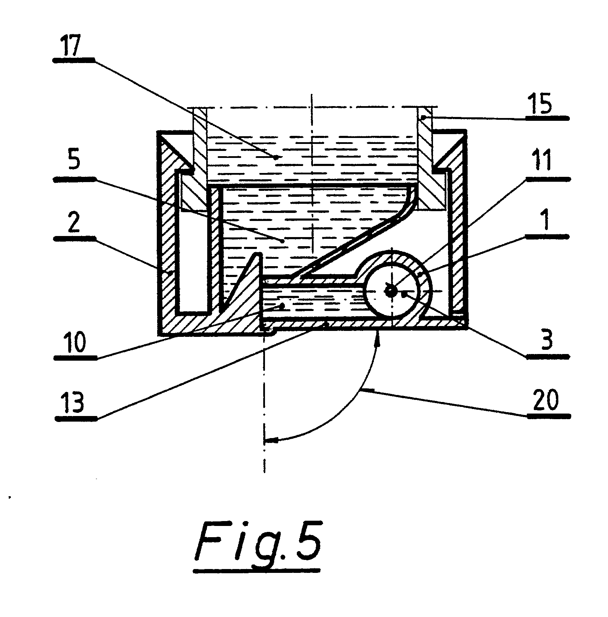

Fig.5 zeigt den gleichen Querschnitt wie Fig. 4, jedoch mit dem Unterschied, daß die Lasche (13) in der Position sich befindet, in der die Freigabe des Spendegutes (17) möglich ist. In dieser Position ist der Verbindungskanal in der Lasche (10) vom Verbindungskanal in der Kappe (5) ganz abgedichtet. In dieser Position der Lasche (13) ist die Korrektur des Dosiervolumens im Hohlraum (3) nicht möglich.

Bezugszeichenliste

1. Gehäuse
2. Kappe (Abdeckung)
3. Hohlraum (Meßraum)
4. Verbindungskanalachse
5. Verbindungskanal in der Kappe (2)
6. Kolbenstange
7. Kolben
8. Ausnehmungen in der Kolbenstange (6)
9. Anschlag
10. Verbindungskanal in der Lasche (13)
11. Austritt-Öffnung
13. Lasche
15. Spendebehälter
16. Vordere Teil der Lasche (13) = Ausgangsbereich
17. Spendegut
18. Länge des Hohlraumes
19. Passung zwischen dem Kolben (7) und Hohlraum (3)
20. Winkelbereich in dem die Versorgung des Hohlaumes (3) mit dem Spendegut (17) stattfindet
21. Kolbenbreite
22. Spannvorrichtung
23. Druckstelle
24. Materialübergänge

## Ansprüche

1. Ein universelles Dosiersystem das aus einer Kappe 2 (Abdeckung) in der eine spezifische, bewegliche Lasche 13, die eine Zuführöffnung aufweist, untergebracht ist besteht, und daß nur in einem engen Bewegungsbereich, zwischen Auf- und Zumachen der Lasche, ein ungehindertes durchlaufen der Dosiersubstanz mittels der Zuführöffnung aus dem Spendebehälter gegeben ist, und daß außerhalb dieses engen Bewegungsbereiches ein Austritt der dosierten Substanz aus dem Spendebehälter nicht erfolgen kann, und daß die Lasche, unabhängig von ihrer Lage, gegenüber der Kappe, mittels der Kappe so an dem Spendebehälter befestigt ist, daß eine ungehinderte Bewegung der Lasche im ganzen Bereich garantiert ist und daß im ganzen Bereich die Verbindung zwischen der Lasche und dem Spendebehälter dicht bleibt und daß die Lasche beim Nichtgebrauchen in die Kappe versenkt wird,
dadurch gekennzeichnet,
daß der Ausgangsbereich (16) der Lasche (13) so spezifisch umgestaltet ist, daß ein Hohlraum (Meßraum) (3) entsteht, und daß der Hohlraum (3) mit dem Spendegut (17) aus dem Spendebehälter (15) mittels des Verbindungskanals (10) nur dann gefüllt werden kann, wenn die Lasche (13) und somit der Hohlraum (3) in einem engen, vorgegebenen Winkelbereich (20) in dem ein ungehinderter Durchlauf des Spendegutes (17) aus dem Spendebehälter (15) in den Hohlraum (3) garantiert ist, sich befindet, und daß das Füllen des Hohlraumes (Meßraum) (3) mit dem Spendegut (17) auf zwei ver schiedene Arten erfolgen kann (siehe Beschreibung), und daß das Spendegut (17) während des Füllungsvorganges sich oberhalb des Hohlraumes (3) befinden muß, und daß die Dosiermenge des Spendegutes (17) im Hohlraum (Meßraum) (3) vor der Freigabe, problemlos korrigiert werden kann, solange sich die Lasche (13) und somit der Hohlraum (3) in dem engen, vorgegebenen Winkel (20) befindet, und/oder daß die Kolbenstange (6) mit einer Spannvorrichtung (22) so spezifisch verbunden ist, daß der Kolben (7) mittels der Kolbenstange (6) und der Spannvorrichtung (22) immer im Endbereich des Hohlraumes (3) gehalten wird, und somit der Hohlraum (3) auf eine ständige maximale Spendegutaufnahme fixiert ist, und daß die Spannvorrichtung (22) mit einem verstellbaren oder nicht verstellbaren Anschlag (9) versehen ist, und daß immer von der maximalen Spendegutmenge die sich im Hohlraum (3) befindet, je nach Einstellung des Anschlags (9) nur eine gewünschte Menge des Spendegutes (17) durch einen Druck auf die jeweils vorgesehene Stelle (23) entnommen wird, und daß die gewünschte Menge stufenlos oder in Stufen geändert werden kann, und daß nach dem abgeschlossenen Dosiervorgang wird die Lasche (13) und der Spendebehälter (15) so positioniert, daß ein ungehindertes Zurückfließen der verbliebenen Spendegutmenge garantiert ist und/oder, daß der Kolben (7) mit der Kolbenstange (6) verbunden ist, und daß die Kolbenstange (6) so spezifisch gestaltet ist, daß durch eine oder mehrere Markierungen, Erhebungen oder Ausnehmungen (8) auf der Kolbenstange (6) oder auf dem Gehäuse (1) eine einwandfreie, genaue Mengenbestimmung durchführbar ist, - bis zu einer Markierung oder bis zum Anschlag (9) -, und daß das Gehäuse (1) im hinteren Bereich des Hohlraumes (3) zu einem Anschlag (9) gestaltet ist oder mit einem anderen, separaten Anschlag versehen ist, und daß der Anschlag (9) gleichzeitig das versehentliche Herausziehen des Kolbens (7) aus dem Gehäuse (1) verhindert, und daß die Freigabe des Spendegutes (17) mittels des beweglichen Kolbens (7) durch die Austritts-Öffnung (11) nur dann möglich ist wenn der Verbindungskanal (10) außerhalb des vorgegebenen Winkelbereichs (20) sich befindet, und somit das Spendegut (17) nicht in den Spendebehälter (15) zurück fließen kann und daß dem Querschnitt des Hohlraumes (3) des beweglichen Kolbens (7) so dicht angepaßt ist, daß auf der ganzen Länge des Hohlraumes (18) eine dichte Passung (19) zwischen dem Hohlraum (3) und dem Kolben (7) immer garantiert ist, und daß die Kolbenbreite (21) der Breite des Verbindungskanals (10) so angepaßt werden muß, daß in der Ausgangsposition des Dosiersystems-Kolben (7) befindet sich im Bereich des Verbindungskanals (10) - ein gleichzeitiges Abdichten des Verbindungskanals (10) und der Austritts-Öffnung (11) garantiert ist, und daß der innere Austritts-Öffnungs-Durchmesser jeweils der dosierten Substanz (17) angepaßt werden muß, und zwar so spezifisch, daß kein selbständiges Austreten der dosierten Substanz (17) während der Vorbereitungsphase auftritt.

2. Dosiersystem nach Anspruch 1,
dadurch gekennzeichnet,
daß die Lasche (13) und die Kappe (2) einstückig ausgebildet sind.

3. Dosiersystem nach Anspruch 1 bis 2,
dadurch gekennzeichnet,
daß die Materialübergänge zwischen Lasche (13) und Kappe (2) derart elastisch ausgebildet sind, daß sie zueinander einschwenk bzw. einklappbar sind, so daß eine vollkommene Dichte im geschlossenen Zustand der Lasche (13) zwischen dem Verbindungskanal (5) und dem Verbindungskanal (10) gegeben ist.

17

15

2

13

10

16

4

11

3

7

18

19

21

5

1

9

23

6

8

*Fig.1*

*Fig.2*

*Fig.3*

EP 0 393 414 A1

*Fig. 4*

*Fig.5*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0251863 (VALOIS) * Spalte 5, Zeile 23 - Spalte 7, Zeile 15; Figuren 5-7 * | 1 | G01F11/02 |
| | --- | | |
| A | DE-A-2213783 (W. NAGEL) * Seite 2, Absatz 2; Figur 2 * | 1 | |
| | --- | | |
| A | EP-A-0189149 (HENKEL) * Seite 7, Zeile 22 - Seite 8, Zeile 27; Figuren 3, 4 * | 1 | |
| | --- | | |
| A | FR-A-2454088 (G. VALLAS) * Seite 3, Zeilen 9 - 34; Figuren 1, 2 * | 1 | |
| | --- | | |
| A | GB-A-2042063 (CORAZZA NATALINO SOCIETA PER AZIONI) * Seite 1, Zeile 96 - Seite 2, Zeile 37; Figur * | 1 | |
| | ----- | | |

**RECHERCHIERTE SACHGEBIETE (Int. Cl.5)**

G01F
B65B

Der vorliegende Recherchenbericht wurde für alle Patentansprüche erstellt

| Recherchenort | Abschlußdatum der Recherche | Prüfer |
|---|---|---|
| DEN HAAG | 10 AUGUST 1990 | HEINSIUS R. |